# EUROPEAN PATENT SPECIFICATION

(11) **EP 4 324 137 B1**
(45) Date of publication and mention of the grant of the patent: **23.09.2026**
(21) Application number: 21728156.7
(22) Date of filing: 16.04.2021
(51) Int. Cl.: H04L 5/00, H04B 7/145

(54) **PASSIVE DEVICE REFERENCE SIGNALS**
REFERENZSIGNALE FÜR PASSIVE VORRICHTUNG
SIGNAUX DE RÉFÉRENCE DE DISPOSITIF PASSIF

(43) Date of publication of application: 21.02.2024
(73) Proprietor: QUALCOMM INCORPORATED, San Diego, California 92121-1714 (US)
(72) Inventor: LY, Hung Dinh, San Diego, California 92121-1714 (US); ZHANG, Yu, San Diego, California 92121-1714 (US); SAHRAEI, Saeid, San Diego, California 92121-1714 (US)
(74) Representative: Jaeger, Michael David
(86) International application number: PCT/CN2021/087686
(87) International publication number: WO 2022/217572

(56) References cited:
- WO-A1-2020/254031
- WO-A2-2020/091879
- DI RENZO MARCO ET AL: "Smart Radio Environments Empowered by Reconfigurable Intelligent Surfaces: How It Works, State of Research, and The Road Ahead", IEEE JOURNAL ON SELECTED AREAS IN COMMUNICATIONS, IEEE SERVICE CENTER, PISCATAWAY, US, vol. 38, no. 11, 14 July 2020 (2020-07-14), pages 2450 - 2525, XP011815060, ISSN: 0733-8716, [retrieved on 20201015], DOI: 10.1109/JSAC.2020.3007211

## Description

### FIELD OF THE DISCLOSURE

Aspects of the present disclosure generally relate to wireless communication and to techniques and apparatuses for using reference signals reflected from passive devices.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" or "forward link" refers to the communication link from the BS to the UE, and "uplink" or "reverse link" refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.

WO 2020/091879 A2 discusses a method that includes transmitting at least two parts of an encoded and secured message over at least two beam pair links. WO 2020/254031 A1 discusses a system comprising a plurality of antenna units that are configured to receive an RF signal and passively reflect the RF signal. Di Renzo Marco et al.: "Smart Radio Environments Empowered by Reconfigurable Intelligent Surfaces: How It Works, State of Research, and The Road Ahead", IEEE Journal on Selected Areas in Communications, vol. 38, no. 11 discusses reconfigurable intelligent surface-empowered smart radio environments.

### SUMMARY

The invention is defined by the independent claims. Advantageous embodiments are set out in the dependent claims.

### BRIEF DESCRIPTION OF THE DRAWINGS

So that the features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of using a passive device, in accordance with the present disclosure.
Fig. 4 is a diagram illustrating an example of a deployment of a passive device, in accordance with the present disclosure.
Fig. 5 is a diagram illustrating an example of a network-initiated scenario for indicating use of a passive device, in accordance with the present disclosure.
Fig. 6 is a diagram illustrating an example of a UE-initiated scenario for indicating use of a passive device, in accordance with the present disclosure.
Fig. 7 is a diagram illustrating an example of mobility management using a passive device, in accordance with the present disclosure.
Fig. 8 is a diagram illustrating an example process performed, for example, by a UE, in accordance with the present disclosure.
Fig. 9 is a diagram illustrating an example process performed, for example, by a base station, in accordance with the present disclosure.
Figs. 10-11 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

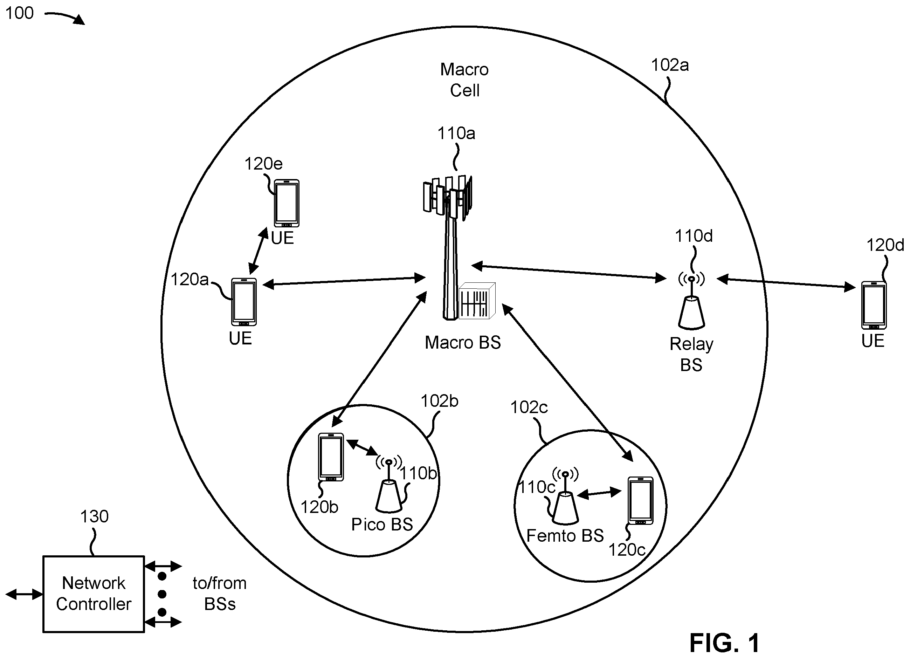

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

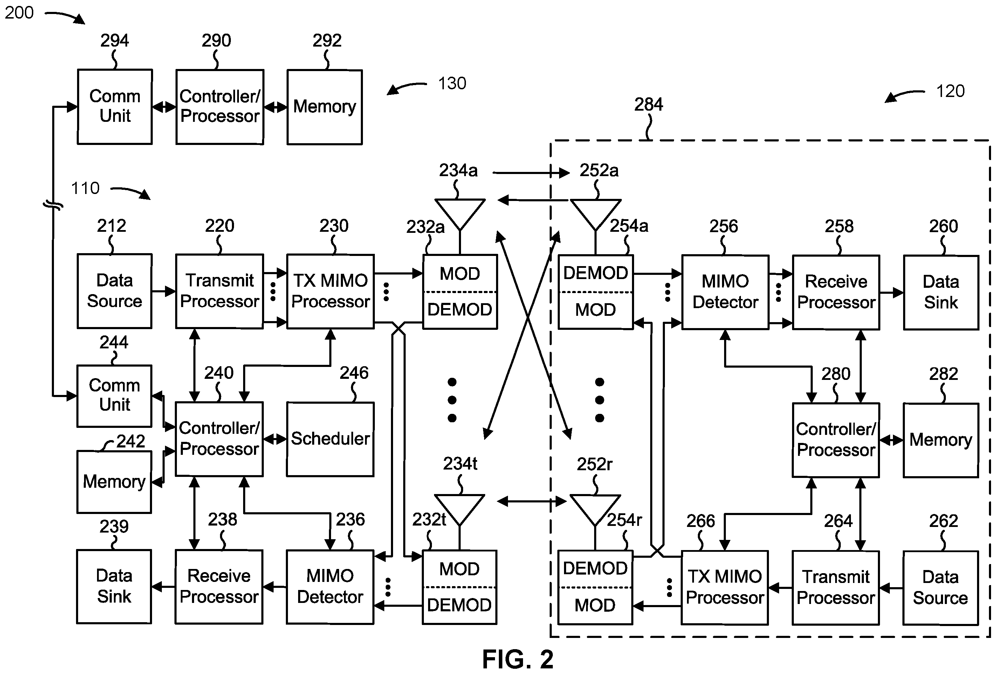

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 1-11).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 1-11).

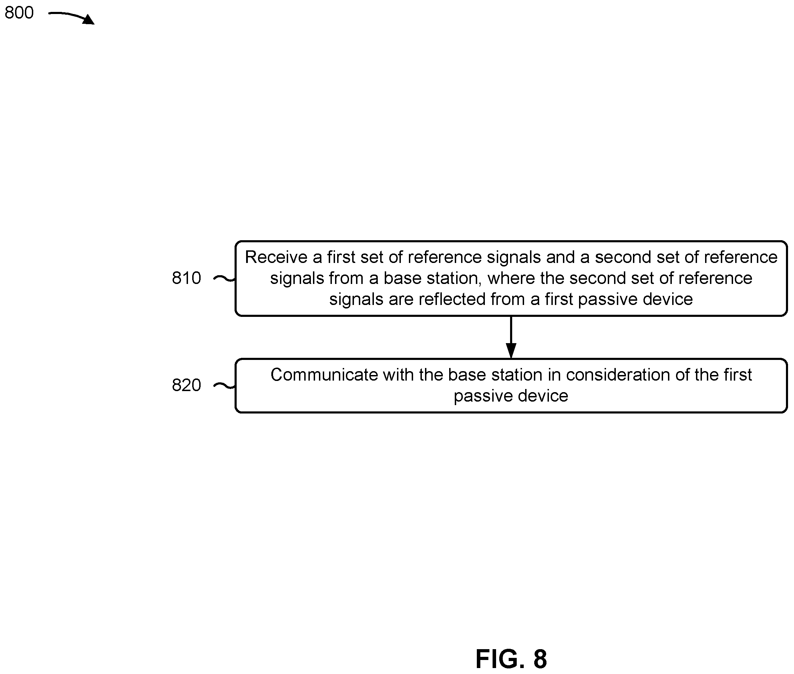

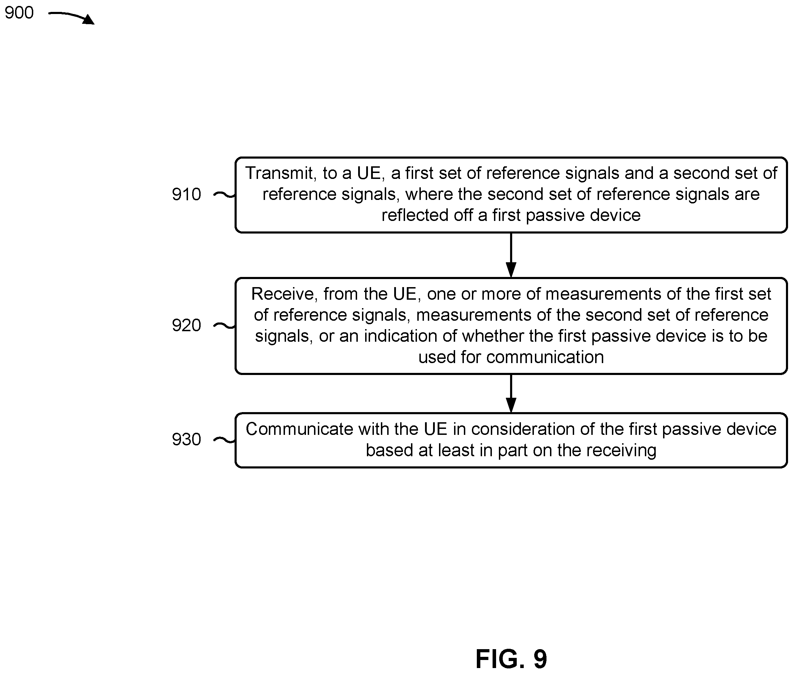

Controller/processor 240 of the base station 110, controller/processor 280 of the UE 120, and/or any other component(s) of Fig. 2 may perform one or more techniques associated with using reference signals reflected from passive devices, as described in more detail elsewhere herein. For example, controller/processor 240 of base station 110, controller/processor 280 of the UE 120, and/or any other component(s) of Fig. 2 may perform or direct operations of, for example, process 800 of Fig. 8, process 900 of Fig. 9, and/or other processes as described herein. Memories 242 and 282 may store data and program codes for the base station 110 and the UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, process 900 of Fig. 9, and/or other processes as described herein. In some aspects, executing instructions may include running the instructions, converting the instructions, compiling the instructions, and/or interpreting the instructions, among other examples.

In some aspects, the UE 120 includes means for receiving a first set of reference signals and a second set of reference signals from a base station, where the second set of reference signals are reflected from a first passive device, and/or means for communicating with the base station in consideration of the first passive device. The means for the UE 120 to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the base station 110 includes means for transmitting, to a UE 120, a first set of reference signals and a second set of reference signals, where the second set of reference signals are reflected off a first passive device; means for receiving, from the UE, one or more of measurements of the first set of reference signals, measurements of the second set of reference signals, or an indication of whether the first passive device is to be used for communication; and/or means for communicating with the UE in consideration of the first passive device based at least in part on the receiving. The means for the base station 110 to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

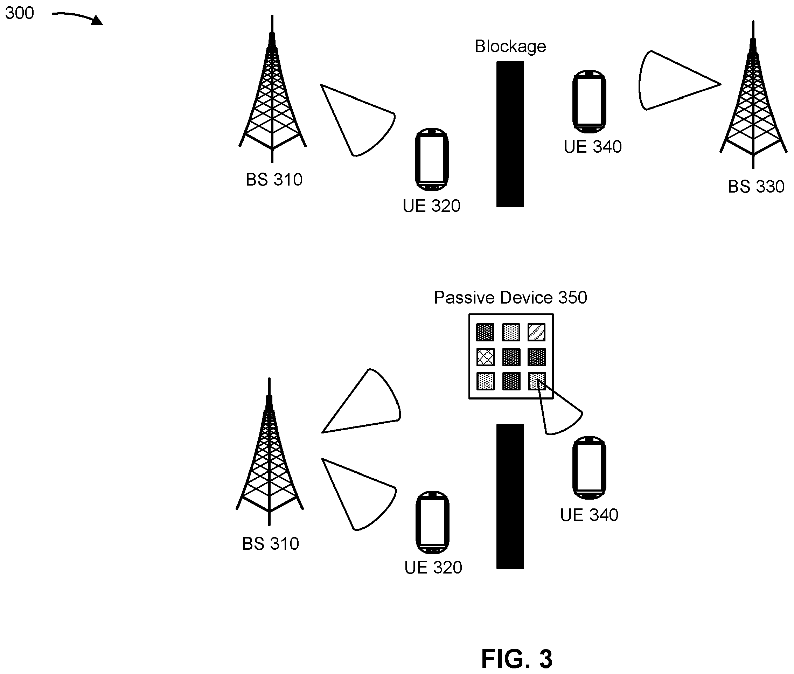

Fig. 3 is a diagram illustrating an example 300 of using a passive device, in accordance with the present disclosure. Example 300 shows a base station (BS) 310 (e.g., BS 110) that may communicate with a UE 320 (e.g., UE 120), and a BS 330 (e.g., BS 110) that may communicate with UE 340 (e.g., UE 120).

A network may have antennas that are grouped together at a transmitter or receiver, in order to increase throughput. The grouping of antennas may be referred to as "massive MIMO." Massive MIMO may use active antenna units (AAUs) to achieve high beamforming gain. An AAU may combine an antenna, a radio, a tower-mounted amplifier, a feeder, and/or jumper functionalities into a single unit. An AAU may include an individual radio frequency (RF) chain for each antenna port.

There may be barriers to massive MIMO. The transmission of signals may be blocked by buildings, natural topography, or other blocking structures. For example, BS 310 may transmit signals to UE 320, but BS 310 may not able to transmit signals to UE 340. As shown in example 300, there is some type of blockage between BS 310 and UE 340. UE 340 may instead be served by BS 330.

In order to resolve transmission issues due to the blockage, the network may use a passive device 350 that is configured as a reconfigurable intelligent surface (RIS). An RIS may be a two-dimensional surface of engineered material whose properties are reconfigurable rather than static. The engineered material may contain integrated electronic circuits and software that enable the control of a wireless medium by altering an impedance of the surface or a portion of the surface. The change in impedance may alter a phase shift and/or an angle of reflection. Scattering, absorption, reflection, and diffraction properties may be changed with time and controlled by the software. An RSI may act as a reflective lens. In one example, an RIS may include large arrays of inexpensive antennas spaced half of a wavelength apart. In another example, an RIS may include a metamaterial-based planar or conformal large surfaces whose elements (e.g., square elements) have sizes and inter-distances that are smaller than the wavelength. Each of the elements may have a configured impedance or other surface properties that are controlled by a voltage to the element. An RIS may also be referred to as a "software-controlled metasurface" or an "intelligent reflecting surface".

The passive device 350, when configured to operate as an RIS, may not have antennas or RF chains of its own, but may include a large number of small, low-cost elements on a surface to passively reflect incident signals transmitted from BS 310. A controller of the passive device 350 may control the elements on the surface. The passive device 350 may be a smart device that is configured to use a specific angle of reflection for the signals. BS 310 may control the angle of reflection, an amplitude, a weight, a phase, and/or a width of the elements of the passive device 350 by controlling a voltage to each of the elements. In sum, the passive device 350 may help to control a propagation environment with less power consumption than AAUs. Passive devices may even replace AAUs in the propagation environment. MIMO that uses passive devices may be referred to as "passive MIMO" or "P-MIMO". The passive device 350 may be also referred to as a "passive node" or a "P-MIMO device".

As indicated above, Fig. 3 is provided as an example. Other examples may differ from what is described with regard to Fig. 3.

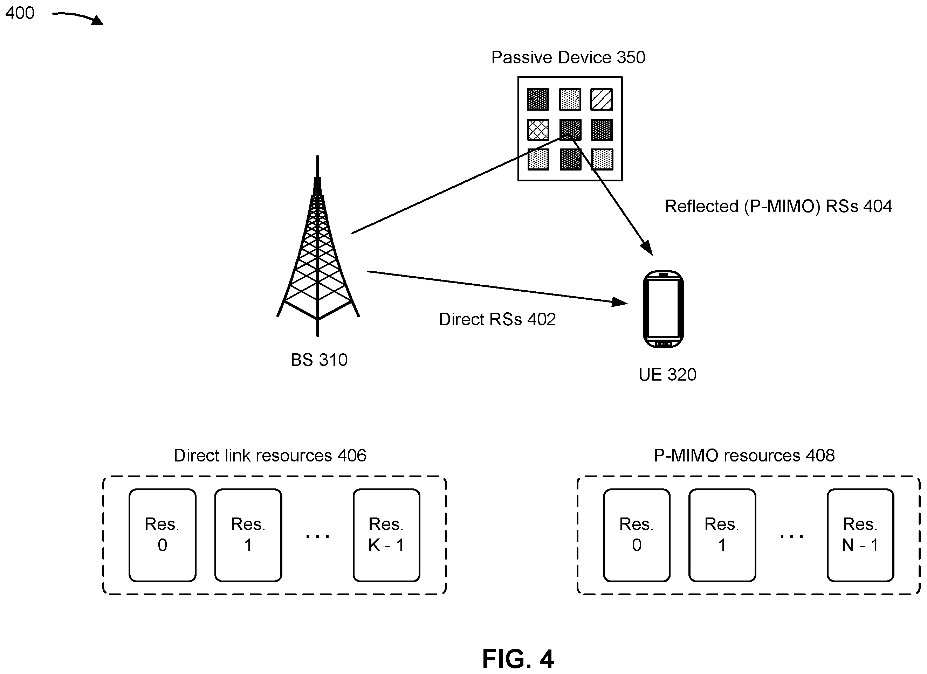

Fig. 4 is a diagram illustrating an example 400 of a deployment of a passive device, in accordance with the present disclosure.

In some scenarios, BS 310 may prepare to transmit signals to UE 320 or an area where UE 320 is located, but there may be an issue with the propagation environment (e.g., blockage). Therefore, the passive device 350 may be deployed in the propagation environment.

BS 310 may use the passive device 350 for initial access of UE 320 if UE 320 is out of coverage (e.g., in a dead zone) or to provide more degrees of freedom for transmission to UE 320. BS 310 may transmit reference signals and use measurements of the reference signals by UE 320 to make transmission and mobility decisions for UE 320. However, as UE 320 moves within a cell or across cells, UE 320 may move from one passive device to another passive device, or from passive device coverage to outside passive device coverage. UE 320 may not be aware that the passive device 350 is being used to reflect reference signals. This lack of information may lead to inaccurate measurements and sub-optimal decisions that degrade communications. Degraded communications wasted processing resources and signaling resources.

According to various aspects described herein, BS 310 may transmit a set of reference signals using the passive device 350. The reference signals may be specific to passive devices configured as RISs and may support intra-cell RIS management (addition or removal of passive devices) and/or mobility management. The reference signals may include RIS-specific reference signals, such as special CSI-RSs or a reference signal with a new format or content associated with passive devices configured as RISs. A reference signal may be RIS-specific by nature of arriving at a specific direction configured for RIS-specific reference signals. An RIS-specific reference signal may be quasi-co-located (QCLed) to, or associated with, a synchronization signal block (SSB) or a CSI-RS (e.g., cell-specific) or another RIS-specific reference signal. An RIS-specific reference signal may be periodic or aperiodic.

Example 400 shows that BS 310 may transmit a first set of reference signals (direct RSs 402) directly to UE 320 and a second set of reference signals (reflected P-MIMO RSs 404) that reflect off the passive device 350 to UE 320. The direct RSs 402 may be transmitted on one or more direct link resources 406 (e.g., 0 ... K-1 resources). The direct RSs 402 may be an SSB. The reflected RSs 404 may be transmitted on one or more P-MIMO resources 408 (e.g., 0 ... *N-*1 resources). The reflected RSs 404 may be RIS-specific, or specific to indicating or being used by passive devices configured as an RIS. The reflected RSs 404 may include content and/or a format that is not currently used for reference signals.

UE 320 and BS 310 may communicate with one another in consideration of the passive device 350. In other words, UE 320 and/or BS 310 may determine to use the passive device 350 or not use the passive device 350. Accordingly, communications may be configured to use or not use the passive device 350. For example, in a network-initiated scenario, UE 320 may measure a mixture of the first set of reference signals and the second set of reference signals. UE 320 may transmit an indication of measurements (e.g., RSRP, RSRQ, signal-to-noise ratio (SNR), signal-to-interference-plus-noise ratio (SINR)) of the first set of reference signals and measurements of the second set of reference signals. BS 310 may determine whether the passive device 350 is to be used, not used, or if there should be a change to another passive device. BS 310 may select a passive device among multiple devices that may be used.

BS 310 may determine whether to use the passive device 350, or use another passive device, based at least in part on the measurements. For example, BS 310 may determine to use the passive device 350 if a measurement of the first set of reference signals does not satisfy a measurement threshold (e.g., minimum RSRP, minimum SNR, minimum SINR) and/or if a measurement of the second set of reference signals does satisfy the measurement threshold. BS 310 may transmit an indication of the determination via a radio resource control (RRC) message, a medium access control control element (MAC-CE), downlink control information (DCI), or other physical layer (L1 or L2) signaling.

In a UE-initiated scenario, UE 320 may make the determination and transmit an indication of the determination. The indication may be based at least in part on the measurements, including at least the reference signals reflected from the passive device 350. The reference signals reflected from the passive device 350 may be RIS-specific (specific to passive devices configured as an RIS). The indication may indicate a presence of the passive device 350, a preference that the passive device 350 be used, and/or that the passive device 350 will be used.

By providing an indication of the presence of the passive device 350, BS 310 and UE 320 may take advantage of the passive device 350 if the measurements indicate that it is beneficial to use the passive device 350. BS 310 and UE 320 may optimize some procedures for communication with RIS assistance (e.g., beam measurement procedure, CSI measurement/report). As a result, communications may improve and cause BS 310 and UE 320 to conserve processing resources and signaling resources that would otherwise be wasted by degraded communications and/or consumed by retransmissions.

As indicated above, Fig. 4 is provided as an example. Other examples may differ from what is described with regard to Fig. 4.

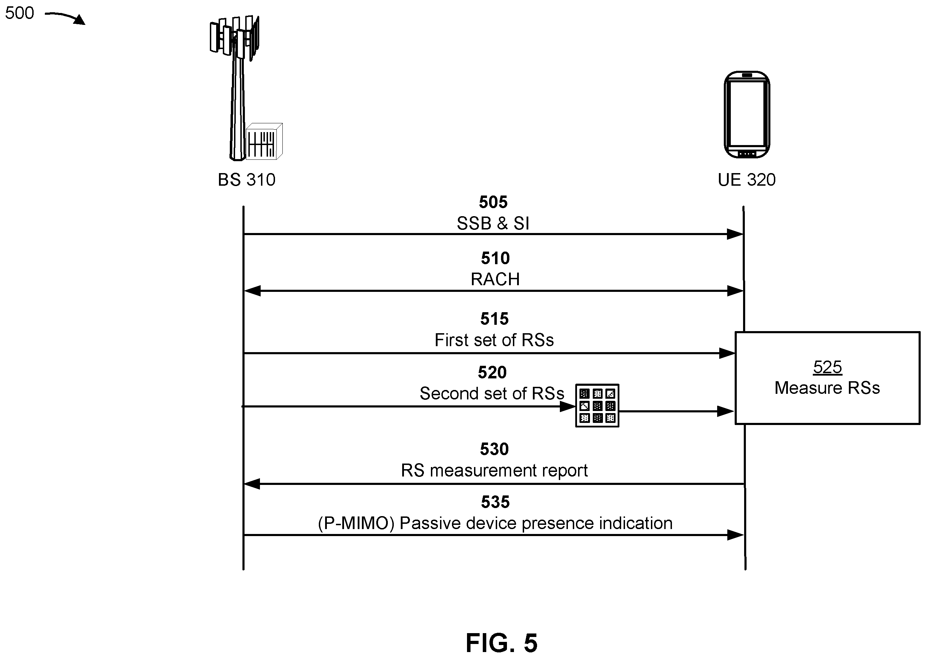

Fig. 5 is a diagram illustrating an example 500 of a network-initiated scenario for indicating use of a passive device, in accordance with the present disclosure. As shown in Fig. 5, BS 310 may communicate (e.g., transmit an uplink transmission and/or receive a downlink transmission) with UE 320. BS 310 and UE 320 may be part of a wireless network (e.g., wireless network 100).

As shown by reference number 505, BS 310 may transmit an SSB and/or system information (SI). As shown by reference number 510, BS 310 and UE 320 may perform a random access channel (RACH) procedure to establish a connection. The system information and/or a RACH message may configure UE 320 with a set of resources for P-MIMO management and/or configure UE 320 for measurement of reference signals reflected from a passive device (e.g., the passive device 350).

As shown by reference number 515, BS 310 may transmit a first set of reference signals, such as CSI-RSs or other common reference signals, in a direct link to UE 320. As shown by reference number 520, BS 310 may transmit a second set of reference signals, which may be reflected from the passive device 350. The second set of reference signals may be common reference signals (e.g., standard CSI-RSs) or RIS-specific reference signals (e.g., CSI-RSs that are especially for RISs). As shown by reference number 525, UE 320 may measure the first set of reference signals, the second set of reference signals, or a mixture thereof.

As shown by reference number 530, UE 320 may transmit an indication of measurements of the first set of reference signals and/or measurements of the second set of reference signals. BS 310 may receive the measurements and identify passive devices that are associated with the measurements. BS 310 may determine whether the passive device 350 is to be used. As shown by reference number 535, BS 310 may transmit an indication that the passive device 350 is present. The indication may be a single bit indication (e.g., 0 or 1) or a multi-bit indication. The indication may indicate that the passive device 350 is to be used for communications between BS 310 and UE 320.

As indicated above, Fig. 5 is provided as an example. Other examples may differ from what is described with regard to Fig. 5.

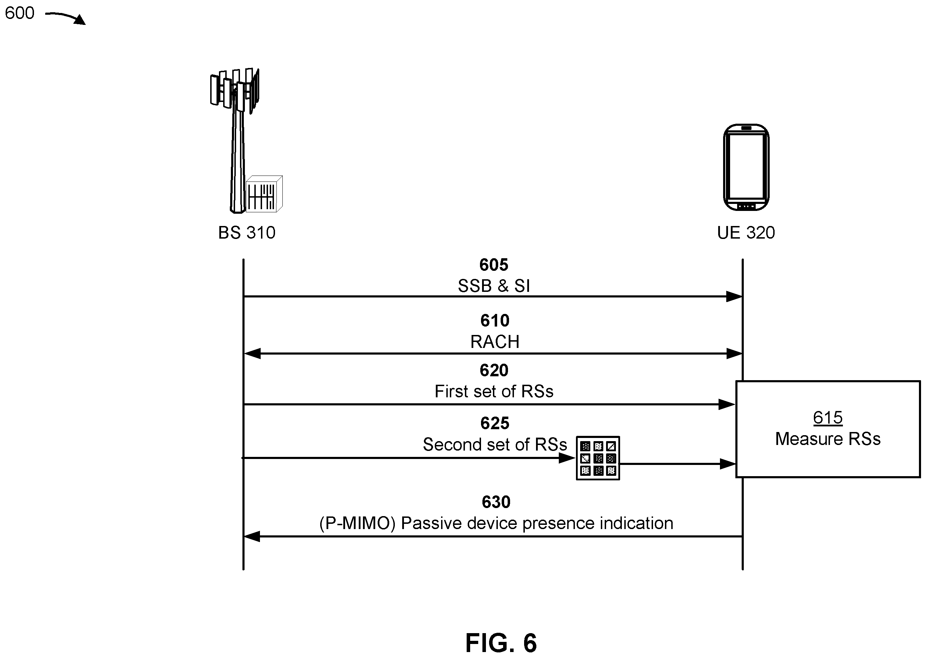

Fig. 6 is a diagram illustrating an example 600 of a UE-initiated scenario for indicating use of a passive device, in accordance with the present disclosure. As shown in Fig. 6, BS 310 may communicate with UE 320.

As shown by reference number 605, BS 310 may transmit an SSB and/or SI. As shown by reference number 610, BS 310 and UE 320 may perform a RACH procedure to establish a connection. As shown by reference number 615, BS 310 may transmit a first set of reference signals, which may be common reference signals, in a direct link to UE 320. As shown by reference number 620, BS 310 may transmit a second set of reference signals, which may be reflected from the passive device 350. The second set of reference signals may be common reference signals or RIS-specific reference signals. UE 320 may have information about how the first set of reference signals and the second set of reference signals are partitioned. As shown by reference number 625, UE 320 may measure the first set of reference signals, the second set of reference signals, or a mixture thereof.

As shown by reference number 630, UE 320 may transmit an indication that the passive device 350 is present and will be used, based at least in part on measurements of the first set of reference signals and/or measurements of the second set of reference signals. The indication may include reference signal resource identifiers (IDs). The indication may enable a P-MIMO procedure, such as use of the passive device 350. BS 310 may use the measurements to adjust communications with UE 320 and/or to reconfigure the P-MIMO management resources of UE 320. In some aspects, UE 320 may measure a third set of reference signals from another passive device and select use of the passive device 350 and/or the other passive device based at least in part on measurements of the third set of reference signals.

As indicated above, Fig. 6 is provided as an example. Other examples may differ from what is described with regard to Fig. 6.

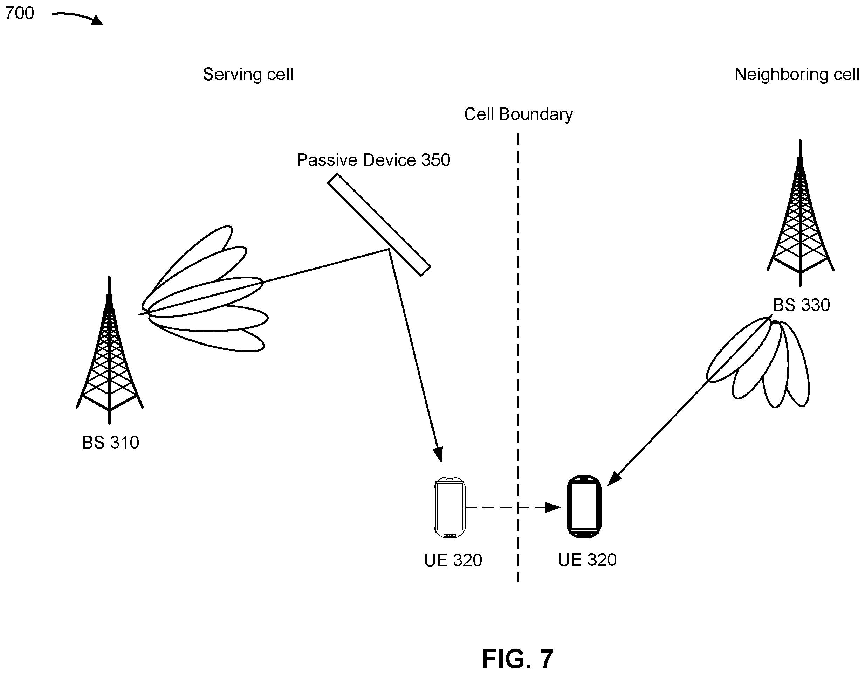

Fig. 7 is a diagram illustrating an example 700 of mobility management using a passive device, in accordance with the present disclosure. Example 700 shows that BS 310 may communicate with UE 320 via the passive device 350. BS 330 may also communicate with UE 320.

Reference signals associated with or specific to passive devices may be used to support inter-cell handover determinations. For example, BS 310 may reconfigure mobility management resources of UE 320 and/or determine if UE 320 is to perform a mobility operation (e.g., handover). The first set of reference signals and the second set of reference signals may be in a serving cell. UE 320 may measure a mixture of these reference signals and direct link reference signals from a neighboring cell of the serving cell. The neighboring cell may have a different cell quality than the serving cell. In some aspects, UE 320 may measure a mixture of the first set of reference signals, the second set of reference signals, direct link reference signals from the neighboring cell, and/or reference signals from the neighboring cell reflected off of the passive device 350 or another passive device. UE 320 may configure P-MIMO management resources and/or mobility management resources based at least in part on measurements from these reference signals. UE 320 may transmit an indication of the corresponding measurements to BS 310. BS 310 may determine to handover UE 320 from the serving cell to the neighboring cell based at least in part on the measurements. If there is a passive device in the neighboring cell, BS 310 may indicate the presence of the passive device and/or other P-MIMO resources in a handover command. That is, UE 320 may be configured to perform communication with BS 330 in consideration of one or more passive devices and to be enabled for such communication early in the handover procedure.

In some aspects, UE 320 may apply a scaling factor to the first set of reference signals or the second set of reference signals in order to normalize measurements when there is little to no parity between direct reference signals and reflected reference signals. For example, measurements of the second set of reference signals may be multiplied by a scaling factor of 1.5, 2, or 3. Similarly, UE 320 may apply a scaling factor to either measurements of the serving cell or measurements of the neighboring cell such that the measurements are normalized. In some aspects, scaling factors may be applied for reference signals of different types (e.g., different bandwidths, different time division duplex (TDD) formats, different time-frequency resources). BS 310 may indicate the scaling factors to UE 320. In this way, the indication or overall cell quality measurement that UE 320 transmits to BS 310 may be more accurate for passive device and mobility determinations.

As indicated above, Fig. 7 is provided as an example. Other examples may differ from what is described with regard to Fig. 7.

Fig. 8 is a diagram illustrating an example process 800 performed, for example, by a UE, in accordance with the present disclosure. Example process 800 is an example where the UE (e.g., UE 120, UE 320) performs operations associated with using reference signals reflected from passive devices.

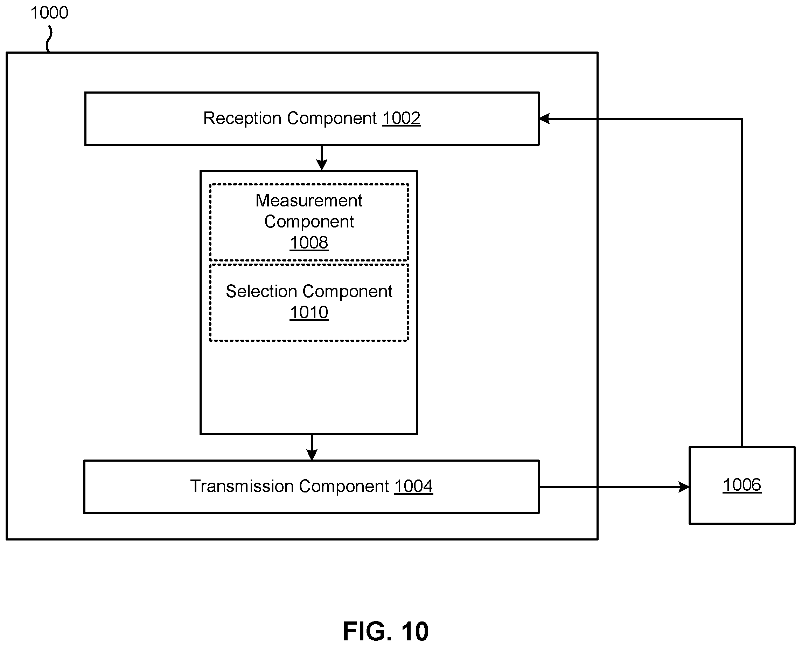

As shown in Fig. 8, in some aspects, process 800 may include receiving a first set of reference signals and a second set of reference signals from a base station (block 810). For example, the UE (e.g., using reception component 1002 depicted in Fig. 10) may receive a first set of reference signals and a second set of reference signals from a base station, as described above. In some aspects, the second set of reference signals are reflected from a first passive device. The first passive device may operate as an RIS.

As further shown in Fig. 8, in some aspects, process 800 may include communicating with the base station in consideration of the first passive device (block 820). For example, the UE (e.g., using reception component 1002 and transmission component 1004 depicted in Fig. 10) may communicate with the base station in consideration of the first passive device, as described above.

Process 800 may include additional aspects, such as any single aspect or any combination of aspects described below and/or in connection with one or more other processes described elsewhere herein.

In a first aspect, process 800 includes measuring the first set of reference signals and the second set of reference signals, and transmitting an indication of whether the first passive device is to be used for communication, based at least in part on the measuring.

In a second aspect, alone or in combination with the first aspect, process 800 includes measuring one or more of the first set of reference signals, the second set of reference signals, or a third set of reference signals that are reflected from a second passive device, selecting to use one or more of the first passive device or the second passive device, based at least in part on the measuring, and transmitting an indication indicating whether one or more of the first passive device or the second passive device is to be used for communication based at least in part on the selecting.

In a third aspect, alone or in combination with one or more of the first and second aspects, process 800 includes measuring the first set of reference signals and the second set of reference signals, transmitting measurements of the first set of reference signals and measurements of the second set of reference signals, and receiving an indication of whether the first passive device is to be used for communication.

In a fourth aspect, alone or in combination with one or more of the first through third aspects, the second set of reference signals includes one or more reference signals that are quasi-co-located, or that are associated, with an SSB.

In a fifth aspect, alone or in combination with one or more of the first through fourth aspects, the second set of reference signals are periodic.

In a sixth aspect, alone or in combination with one or more of the first through fifth aspects, the second set of reference signals are aperiodic.

In a seventh aspect, alone or in combination with one or more of the first through sixth aspects, the first set of reference signals and the second set of reference signals are in a serving cell of the UE, and process 800 includes measuring a third set of reference signals from a neighboring cell of the serving cell, and transmitting measurements of the third set of reference signals.

In an eighth aspect, alone or in combination with one or more of the first through seventh aspects, process 800 includes receiving a handover command based at least in part on transmitting the measurements of the first set of reference signals, the measurements of the second set of reference signals, and the measurements of the third set of reference signals.

In a ninth aspect, alone or in combination with one or more of the first through eighth aspects, process 800 includes measuring a fourth set of reference signals from the neighboring cell that are reflected from a second passive device operating as an RIS, and transmitting measurements of the fourth set of reference signals.

In a tenth aspect, alone or in combination with one or more of the first through ninth aspects, process 800 includes applying a scaling factor to one or more of the measurements of the first set of reference signals, the measurements of the second set of reference signals, or the measurements of the third set of reference signals such that measurements corresponding to reference signals reflected from the first passive device are normalized with respect to measurements corresponding to reference signals that are not reflected from the first passive device.

In an eleventh aspect, alone or in combination with one or more of the first through tenth aspects, process 800 includes receiving, in a handover command, an indication of whether the first passive device is to be used for communication.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating an example process 900 performed, for example, by a base station, in accordance with the present disclosure. Example process 900 is an example where the base station (e.g., base station 110, BS 310) performs operations associated with using reference signals reflected from passive devices.

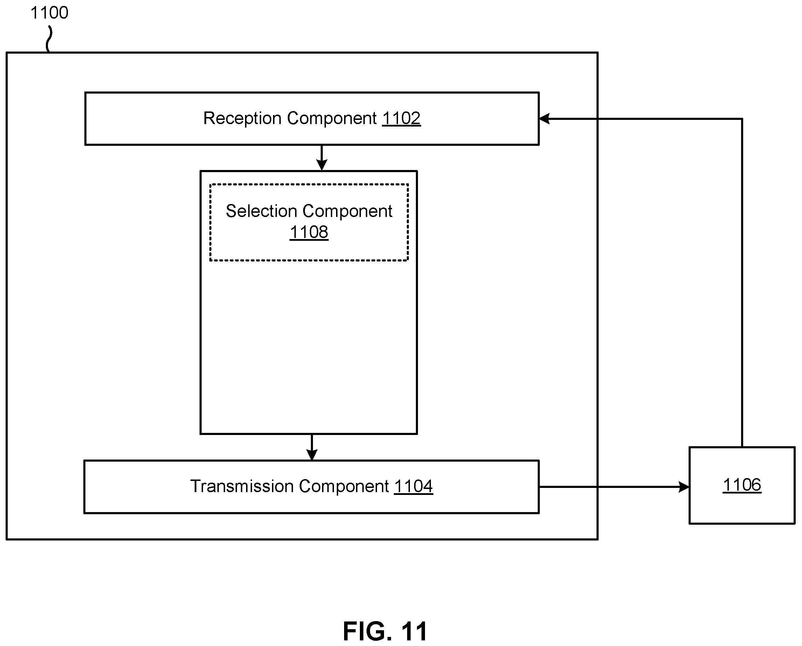

As shown in Fig. 9, in some aspects, process 900 may include transmitting, to a UE, a first set of reference signals and a second set of reference signals (block 910). For example, the base station (e.g., using transmission component 1104 depicted in Fig. 11) may transmit, to a UE, a first set of reference signals and a second set of reference signals, as described above. In some aspects, the second set of reference signals are reflected from a first passive device operating as an RIS.

As further shown in Fig. 9, in some aspects, process 900 may include receiving, from the UE, one or more of measurements of the first set of reference signals, measurements of the second set of reference signals, or an indication of whether the first passive device is to be used for communication (block 920). For example, the base station (e.g., using reception component 1102 depicted in Fig. 11) may receive, from the UE, one or more of measurements of the first set of reference signals, measurements of the second set of reference signals, or an indication of whether the first passive device is to be used for communication, as described above.

As further shown in Fig. 9, in some aspects, process 900 may include communicating with the UE in consideration of the first passive device based at least in part on the receiving (block 930). For example, the base station (e.g., using reception component 1102 and transmission component 1104 depicted in Fig. 11) may communicate with the UE in consideration of the first passive device based at least in part on the receiving, as described above.

Process 900 may include additional aspects, such as any single aspect or any combination of aspects described below and/or in connection with one or more other processes described elsewhere herein.

In a first aspect, process 900 includes transmitting an indication of whether the first passive device is to be used for communication based at least in part on the measurements of the first set of reference signals and measurements of the second set of reference signals.

In a second aspect, alone or in combination with the first aspect, the first set of reference signals and the second set of reference signals are in a serving cell of the UE, and process 900 includes receiving measurements of a third set of reference signals from a neighboring cell of the serving cell.

In a third aspect, alone or in combination with one or more of the first and second aspects, process 900 includes transmitting a handover command based at least in part on one or more of the measurements of the first set of reference signals, the measurements of the second set of reference signals, or the measurements of the third set of reference signals.

In a fourth aspect, alone or in combination with one or more of the first through third aspects, process 900 includes receiving measurements of a fourth set of reference signals from the neighboring cell that are reflected off a second passive device operating as an RIS, and transmitting a handover command based at least in part on one or more of the measurements of the first set of reference signals, the measurements of the second set of reference signals, the measurements of the third set of reference signals, or the measurements of the fourth set of reference signals.

In a fifth aspect, alone or in combination with one or more of the first through fourth aspects, process 900 includes transmitting, in a handover command, an indication of whether the first passive device is to be used for communication.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a block diagram of an example apparatus 1000 for wireless communication. The apparatus 1000 may be a UE, or a UE may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include a measurement component 1008 and/or a selection component 1010, among other examples.

In some aspects, the apparatus 1000 may be configured to perform one or more operations described herein in connection with Figs. 1-7. Additionally, or alternatively, the apparatus 1000 may be configured to perform one or more processes described herein, such as process 800 of Fig. 8. In some aspects, the apparatus 1000 and/or one or more components shown in Fig. 10 may include one or more components of the UE described above in connection with Fig. 2. Additionally, or alternatively, one or more components shown in Fig. 10 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1006. In some aspects, the reception component 1002 may include one or more antennas, a demodulator, a MIMO detector, a receive processor, a controller/processor, a memory, or a combination thereof, of the UE described above in connection with Fig. 2.

The transmission component 1004 may transmit communications, such as reference signals, control information, data communications, or a combination thereof, to the apparatus 1006. In some aspects, one or more other components of the apparatus 1006 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modulator, a transmit MIMO processor, a transmit processor, a controller/processor, a memory, or a combination thereof, of the UE described above in connection with Fig. 2. In some aspects, the transmission component 1004 may be co-located with the reception component 1002 in a transceiver.

The reception component 1002 may receive a first set of reference signals and a second set of reference signals from a base station, wherein the second set of reference signals are reflected from a first passive device operating as an RIS. The reception component 1002 and the transmission component 1004 may communicate with the base station in consideration of the first passive device.

The measurement component 1008, in coordination with the reception component 1002, may measure the first set of reference signals and the second set of reference signals. The transmission component 1004 may transmit an indication of whether the first passive device is to be used for communication, based at least in part on the measuring. The measurement component 1008 may measure one or more of the first set of reference signals, the second set of reference signals, or a third set of reference signals that are reflected from a second passive device operating as an RIS.

The selection component 1010 may select to use one or more of the first passive device or the second passive device, based at least in part on the measuring. The transmission component 1004 may transmit an indication indicating whether one or more of the first passive device or the second passive device is to be used for communication based at least in part on the selecting. The selection component 1010 may select to use the first passive device or not to use the first passive device.

The transmission component 1004 may transmit measurements of the first set of reference signals and measurements of the second set of reference signals. The reception component 1002 may receive an indication of whether the first passive device is to be used for communication.

The reception component 1002 may receive a handover command based at least in part on transmitting the measurements of the first set of reference signals, the measurements of the second set of reference signals, and the measurements of the third set of reference signals.

The measurement component 1008 may measure a fourth set of reference signals from the neighboring cell that are reflected from a second passive device operating as an RIS. The transmission component 1004 may transmit measurements of the fourth set of reference signals.

The measurement component 1008 may apply a scaling factor to one or more of the measurements of the first set of reference signals, the measurements of the second set of reference signals, or the measurements of the third set of reference signals such that measurements corresponding to reference signals reflected from the first passive device are normalized with respect to measurements corresponding to reference signals that are not reflected from the first passive device. The reception component 1002 may receive, in a handover command, an indication of whether the first passive device is to be used for communication.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

Fig. 11 is a block diagram of an example apparatus 1100 for wireless communication. The apparatus 1100 may be a base station, or a base station may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include a selection component 1108, among other examples.

In some aspects, the apparatus 1100 may be configured to perform one or more operations described herein in connection with Figs. 1-7. Additionally, or alternatively, the apparatus 1100 may be configured to perform one or more processes described herein, such as process 900 of Fig. 9. In some aspects, the apparatus 1100 and/or one or more components shown in Fig. 11 may include one or more components of the base station described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1106. In some aspects, the reception component 1102 may include one or more antennas, a demodulator, a MIMO detector, a receive processor, a controller/processor, a memory, or a combination thereof, of the base station described above in connection with Fig. 2.

The transmission component 1104 may transmit communications, such as reference signals, control information, data communications, or a combination thereof, to the apparatus 1106. In some aspects, one or more other components of the apparatus 1106 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the base station described above in connection with Fig. 2. In some aspects, the transmission component 1104 may be co-located with the reception component 1102 in a transceiver.

The transmission component 1104 may transmit, to a UE, a first set of reference signals and a second set of reference signals, wherein the second set of reference signals are reflected off a first passive device operating as an RIS. The reception component 1102 may receive, from the UE, one or more of measurements of the first set of reference signals, measurements of the second set of reference signals, or an indication of whether the first passive device is to be used for communication. The reception component 1102 and the transmission component 1104 may communicate with the UE in consideration of the first passive device based at least in part on the receiving.

The selection component 1108 may select to use the first passive device and/or another passive device based at least in part on the measurements, a network layout, a UE capability, and/or traffic conditions. The transmission component 1104 may transmit an indication of whether the first passive device is to be used for communication based at least in part on the measurements of the first set of reference signals and measurements of the second set of reference signals. The transmission component 1104 may transmit a handover command based at least in part on one or more of the measurements of the first set of reference signals, the measurements of the second set of reference signals, or the measurements of the third set of reference signals.

The reception component 1102 may receive measurements of a fourth set of reference signals from the neighboring cell that are reflected off a second passive device operating as an RIS. The transmission component 1104 may transmit a handover command based at least in part on one or more of the measurements of the first set of reference signals, the measurements of the second set of reference signals, the measurements of the third set of reference signals, or the measurements of the fourth set of reference signals. The transmission component 1104 may transmit, in a handover command, an indication of whether the first passive device is to be used for communication.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A user equipment "UE" (120; 320) for wireless communication, comprising:
a memory; and
one or more processors, coupled to the memory, configured to cause the UE (120; 320) to:
receive (810) a first set of reference signals (402; 515) and a set of reconfigurable intelligent surface "RIS"-specific reference signals (404; 520) from a base station (110; 310), wherein the set of RIS-specific reference signals (404; 520) are configured to be reflected from a first RIS (350);
measure (525; 615) the first set of reference signals (402; 515) and the set of RIS-specific reference signals (404; 520), and one of:
transmit a first indication (630) of whether the first RIS (350) is to be used for communication, based at least in part on the measuring; or
transmit measurements (530) of the first set of reference signals (402; 515) and measurements (530) of the set of RIS-specific reference signals (404; 520), and receive a second indication (535) of whether the first RIS (350) is to be used for communication; and
communicate (820) with the base station (110; 310) according to the first or second indication.

2. The UE of claim 1, wherein the one or more processors are configured to cause the UE to:
measure a third set of reference signals that are reflected from a second RIS;
select to use one or more of the first RIS or the second RIS, based at least in part on the measuring, wherein the first indication indicates whether one or more of the first RISor the second RIS is to be used for communication based at least in part on the selecting.

3. The UE of claim 1, wherein the set of RIS-specific reference signals:
includes one or more reference signals that are quasi-co-located, or that are associated, with a synchronization signal block;
are periodic; or
are aperiodic.

4. The UE of claim 1, wherein the first set of reference signals and the set of RIS-specific reference signals are in a serving cell of the UE, and wherein the one or more processors are configured to cause the UE to:
transmit the measurements of the first set of reference signals and the measurements of the set of RIS-specific reference signals;
measure a third set of reference signals from a neighboring cell of the serving cell; and
transmit measurements of the third set of reference signals.

5. The UE of claim 4, wherein the one or more processors are configured to cause the UE to receive a handover command based at least in part on transmitting the measurements of the first set of reference signals, the measurements of the set of RIS-specific reference signals, and the measurements of the third set of reference signals.

6. The UE of claim 4, wherein the one or more processors are configured to cause the UE to:
measure a fourth set of reference signals from the neighboring cell that are reflected from a second RIS; and
transmit measurements of the fourth set of reference signals.

7. The UE of claim 4, wherein the one or more processors are configured to cause the UE to apply a scaling factor to one or more of the measurements of the first set of reference signals, the measurements of the set of RIS-specific reference signals, or the measurements of the third set of reference signals such that measurements corresponding to reference signals reflected from the first RIS are normalized with respect to measurements corresponding to reference signals that are not reflected from the first RIS.

8. The UE of claim 4, wherein the one or more processors are configured to cause the UE to receive, in a handover command, the second indication of whether the first RIS is to be used for communication.

9. A base station (110; 310) for wireless communication, comprising:
a memory; and
one or more processors, coupled to the memory, configured to cause the base station (110; 310) to:
transmit (910), to a user equipment "UE" (120; 320), a first set of reference signals (402; 515) and a set of reconfigurable intelligent surface "RIS"-specific reference signals (404), wherein the set of RIS-specific reference signals (404; 520) are configured to be reflected off a first RIS (350), and one of:
receive (920), from the UE (120; 320), measurements of the first set of reference signals (402; 515) and measurements of the set of RIS-specific reference signals (404; 520), and transmit a first indication (535) of whether the first RIS (350) is to be used for communication; or
receive, from the UE (120; 320), a second indication (630) of whether the first RIS (350) is to be used for communication; and
communicate (930) with the UE (120; 320) according to the first or second indication.

10. The base station of claim 9, wherein the first set of reference signals and the set of RIS-specific reference signals are in a serving cell of the UE, and wherein the one or more processors are configured to cause the base station to:
receive the measurements of the first set of reference signals and the measurements of the set of RIS-specific reference signals, and transmit a first indication of whether the first RIS is to be used for communication; and
receive measurements of a third set of reference signals from a neighboring cell of the serving cell.

11. The base station of claim 10, wherein the one or more processors are configured to cause the base station to transmit a handover command based at least in part on the measurements of the first set of reference signals, the measurements of the set of RIS-specific reference signals, or the measurements of the third set of reference signals.

12. The base station of claim 10, wherein the one or more processors are configured to cause the base station to:
receive measurements of a fourth set of reference signals from the neighboring cell that are reflected off a second RIS; and
transmit a handover command based at least in part on the measurements of the first set of reference signals, the measurements of the set of RIS-specific reference signals, the measurements of the third set of reference signals, or the measurements of the fourth set of reference signals.

13. The base station of claim 10, wherein the one or more processors are configured to cause the base station to transmit, in a handover command, the first indication of whether the first RIS is to be used for communication.

14. A method of wireless communication performed by a user equipment "UE" (120; 320), comprising:
receiving (810) a first set of reference signals (402; 515) and a set of reconfigurable intelligent surface "RIS"-specific reference signals (404; 520) from a base station (110; 310), wherein the set of RIS-specific reference signals (404; 520) are reflected from a first RIS (350)
measuring the first set of reference signals (402; 515) and the set of RIS-specific reference signals (404; 520), and one of:
transmitting a first indication (630) of whether the first RIS (350) is to be used for communication, based at least in part on the measuring; or
transmitting measurements (530) of the first set of reference signals (402; 515) and measurements (530) of the set of RIS-specific reference signals (404; 520), and receiving a second indication (535) of whether the first RIS (350) is to be used for communication; and
communicating (820) with the base station (110; 310) according to the first or second indication.

15. A method of wireless communication performed by a base station (110; 310), comprising:
transmitting, to a user equipment "UE" (120; 320), a first set of reference signals (402; 515) and a set of reconfigurable intelligent surface "RIS"-specific reference signals (404; 520), wherein the set of RIS-specific reference signals (404; 520) are reflected off a first RIS (350), and one of:
receiving, from the UE (120; 320) measurements (530) of the first set of reference signals (402; 515) and measurements (530) of the set of reference signals (404; 520), and transmitting a first indication (535) of whether the first RIS (350) is to be used for communication; or
receiving, from the UE (120; 320), a second indication (630) of whether the first RIS (350) is to be used for communication; and
communicating with the UE (120; 320) according to the first or second indication.

## Patentansprüche

1. Ein Benutzergerät "UE" (120; 320) zur drahtlosen Kommunikation, das Folgendes aufweist:
einen Speicher; und
einen oder mehrere mit dem Speicher gekoppelte Prozessoren, die darauf ausgelegt sind, das UE (120; 320) zu Folgendem zu veranlassen:
Empfangen (810) eines ersten Satzes von Referenzsignalen (402; 515) und eines Satzes von für rekonfigurierbare intelligente Oberflächen spezifischen, "RIS-spezifischen", Referenzsignalen (404; 520) von einer Basisstation (110; 310), wobei der Satz von RIS-spezifischen Referenzsignalen (404; 520) darauf ausgelegt ist, von einer ersten RIS (350) widergespiegelt zu werden;
Messen (525; 615) des ersten Satzes von Referenzsignalen (402; 515) und des Satzes von RIS-spezifischen Referenzsignalen (404; 520), und zu einem unter Folgendem:
Senden einer ersten Angabe (630), ob die erste RIS (350) für die Kommunikation verwendet werden soll, zumindest teilweise basierend auf der Messung; oder
Senden von Messungen (530) des ersten Satzes von Referenzsignalen (402; 515) und von Messungen (530) des Satzes von RIS-spezifischen Referenzsignalen (404; 520) und Empfangen einer zweiten Angabe (535), ob die erste RIS (350) für die Kommunikation verwendet werden soll; und
Kommunizieren (820) mit der Basisstation (110; 310) entsprechend der ersten oder der zweiten Angabe.

2. UE nach Anspruch 1, wobei der eine oder die mehreren Prozessoren darauf ausgelegt sind, das UE zu Folgendem zu veranlassen:
Messen eines dritten Satzes von Referenzsignalen, die von einer zweiten RIS widergespiegelt werden;
Auswählen der Verwendung einer oder mehrerer unter der ersten RIS oder der zweiten RIS zumindest teilweise basierend auf der Messung, wobei die erste Angabe zumindest teilweise basierend auf der Auswahl angibt, ob eine oder mehrere unter der ersten RIS oder der zweiten RIS für die Kommunikation verwendet werden sollen.

3. UE nach Anspruch 1, wobei der Satz von RIS-spezifischen Referenzsignalen:
ein oder mehr Referenzsignale einschließt, die quasi-kolokalisiert sind oder die einem Synchronisationssignalblock zugeordnet sind;
periodisch ist oder
aperiodisch ist.

4. UE nach Anspruch 1, wobei sich der erste Satz von Referenzsignalen und der Satz von RIS-spezifischen Referenzsignalen in einer bedienenden Zelle des UE befinden, und wobei der eine oder die mehreren Prozessoren darauf ausgelegt sind, das UE zu Folgendem zu veranlassen:
Senden der Messungen des ersten Satzes von Referenzsignalen und der Messungen des Satzes von RIS-spezifischen Referenzsignalen;
Messen eines dritten Satzes von Referenzsignalen von einer Nachbarzelle der bedienenden Zelle; und
Senden der Messungen des dritten Satzes von Referenzsignalen.

5. UE nach Anspruch 4, wobei der eine oder die mehreren Prozessoren darauf ausgelegt sind, das UE zumindest teilweise basierend auf dem Senden der Messungen des ersten Satzes von Referenzsignalen, der Messungen des Satzes von RIS-spezifischen Referenzsignalen und der Messungen des dritten Satzes von Referenzsignalen zum Empfangen eines Übergabebefehls zu veranlassen.

6. UE nach Anspruch 4, wobei der eine oder die mehreren Prozessoren darauf ausgelegt sind, das UE zu Folgendem zu veranlassen:
Messen eines vierten Satzes von Referenzsignalen von der Nachbarzelle, die von einer zweiten RIS widergespiegelt werden; und
Senden von Messungen des vierten Satzes von Referenzsignalen.

7. UE nach Anspruch 4, wobei der eine oder die mehreren Prozessoren darauf ausgelegt sind, das UE zum Anwenden eines Skalierungsfaktors auf eine oder mehrere unter den Messungen des ersten Satzes von Referenzsignalen, den Messungen des Satzes von RIS-spezifischen Referenzsignalen oder den Messungen des dritten Satzes von Referenzsignalen zu veranlassen, so dass Messungen, die von der ersten RIS widergespiegelten Referenzsignalen entsprechen, in Bezug auf Messungen normalisiert werden, die Referenzsignalen entsprechen, die nicht von der ersten RIS widergespiegelt werden.

8. UE nach Anspruch 4, wobei der eine oder die mehreren Prozessoren darauf ausgelegt sind, das UE zum Empfangen der zweiten Angabe, ob die erste RIS für die Kommunikation verwendet werden soll, in einem Übergabebefehl zu veranlassen.

9. Eine Basisstation (110; 310) zur drahtlosen Kommunikation, die Folgendes aufweist:
einen Speicher; und
einen oder mehrere mit dem Speicher gekoppelte Prozessoren, die darauf ausgelegt sind, die Basisstation (110; 310) zu Folgendem zu veranlassen:
Senden (910) eines ersten Satzes von Referenzsignalen (402; 515) und eines Satzes von für rekonfigurierbare intelligente Oberflächen spezifischen, "RISspezifischen", Referenzsignalen (404) an ein Benutzergerät "UE" (120; 320),
wobei der Satz von RIS-spezifischen Referenzsignalen (404; 520) darauf ausgelegt ist, auf einer ersten RIS (350) widergespiegelt zu werden, und zu einem unter Folgendem:
Empfangen (920) von Messungen des ersten Satzes von Referenzsignalen (402; 515) und Messungen des Satzes von RIS-spezifischen Referenzsignalen (404; 520) von dem UE (120; 320) und Senden einer ersten Angabe (535), ob die erste RIS (350) für die Kommunikation verwendet werden soll; oder
Empfangen einer zweiten Angabe (630), ob die erste RIS (350) für die Kommunikation verwendet werden soll, von dem UE (120; 320); und
Kommunizieren (930) mit dem UE (120; 320) entsprechend der ersten oder der zweiten Angabe.

10. Basisstation nach Anspruch 9, wobei sich der erste Satz von Referenzsignalen und der Satz von RIS-spezifischen Referenzsignalen in einer bedienenden Zelle des UE befinden, und wobei der eine oder die mehreren Prozessoren darauf ausgelegt sind, die Basisstation zu Folgendem zu veranlassen:
Empfangen der Messungen des ersten Satzes von Referenzsignalen und der Messungen des Satzes von RIS-spezifischen Referenzsignalen, und Senden einer ersten Angabe, ob die erste RIS für die Kommunikation verwendet werden soll; und
Empfangen von Messungen eines dritten Satzes von Referenzsignalen von einer Nachbarzelle der bedienenden Zelle.

11. Basisstation nach Anspruch 10, wobei der eine oder die mehreren Prozessoren darauf ausgelegt sind, die Basisstation zumindest teilweise basierend auf den Messungen des ersten Satzes von Referenzsignalen, den Messungen des Satzes von RIS-spezifischen Referenzsignalen oder den Messungen des dritten Satzes von Referenzsignalen zum Senden eines Übergabebefehls zu veranlassen.

12. Basisstation nach Anspruch 10, wobei der eine oder die mehreren Prozessoren darauf ausgelegt sind, die Basisstation zu Folgendem zu veranlassen:
Empfangen von Messungen eines vierten Satzes von Referenzsignalen von der Nachbarzelle, die auf einer zweiten RIS widergespiegelt werden; und
Senden eines Übergabebefehls zumindest teilweise basierend auf den Messungen des ersten Satzes von Referenzsignalen, den Messungen des Satzes von RIS-spezifischen Referenzsignales, den Messungen des dritten Satzes von Referenzsignalen oder den Messungen des vierten Satzes von Referenzsignalen.

13. Basisstation nach Anspruch 10, wobei der eine oder die mehreren Prozessoren darauf ausgelegt sind, die Basisstation zum Senden der ersten Angabe, ob die erste RIS für die Kommunikation verwendet werden soll, in einem Übergabebefehl zu veranlassen.

14. Ein Verfahren zur von einem Benutzergerät "UE" (120; 320) ausgeführten drahtlosen Kommunikation, das Folgendes aufweist:
Empfangen (810) eines ersten Satzes von Referenzsignalen (402; 515) und eines Satzes von für rekonfigurierbare intelligente Oberflächen spezifischen, "RISspezifischen", Referenzsignalen (404; 520) von einer Basisstation (110; 310), wobei der Satz von RIS-spezifischen Referenzsignalen (404; 520) von einer ersten RIS (350) widergespiegelt wird;
Messen des ersten Satzes von Referenzsignalen (402; 515) und des Satzes von RIS-spezifischen Referenzsignalen (404; 520), und eines unter Folgendem:
Senden einer ersten Angabe (630), ob die erste RIS (350) für die Kommunikation verwendet werden soll, zumindest teilweise basierend auf der Messung; oder
Senden von Messungen (530) des ersten Satzes von Referenzsignalen (402; 515) und Messungen (530) des Satzes von RIS-spezifischen Referenzsignalen (404; 520) und Empfangen einer zweiten Angabe (535), ob die erste RIS (350) für die Kommunikation verwendet werden soll; und
Kommunizieren (820) mit der Basisstation (110; 310) entsprechend der ersten oder der zweiten Angabe.

15. Ein Verfahren zur von einer Basisstation (110; 310) ausgeführten drahtlosen Kommunikation, das Folgendes aufweist:
Senden eines ersten Satzes von Referenzsignalen 30 (402; 515) und eines Satzes von für rekonfigurierbare intelligente Oberflächen spezifischen, "RIS-spezifischen", Referenzsignalen (404; 520) an ein Benutzergerät "UE" (120; 320), wobei der Satz von RIS-spezifischen Referenzsignalen (404; 520) auf einer ersten RIS (350) widergespiegelt wird, und eines unter Folgendem:
Empfangen von Messungen (530) des ersten Satzes von Referenzsignalen (402; 515) und Messungen (530) des Satzes von Referenzsignalen (404; 520) von dem UE (120; 320), und Senden einer ersten Angabe (535), ob die erste RIS (350) für die Kommunikation verwendet werden soll; oder
Empfangen einer zweiten Angabe (630), ob die erste RIS (350) für Kommunikation verwendet werden soll, von dem UE (120; 320); und
Kommunizieren mit dem UE (120; 320) entsprechend der ersten oder der zweiten Angabe.

## Revendications

1. Équipement utilisateur « UE » (120 ; 320) pour une communication sans fil, comprenant :
une mémoire ; et
un ou plusieurs processeurs, couplés à la mémoire, configurés pour amener l'UE (120 ; 320) à :
recevoir (810) un premier ensemble de signaux de référence (402 ; 515) et un ensemble de signaux de référence spécifiques à une surface intelligente reconfigurable « RIS » (404 ; 520) à partir d'une station de base (110 ; 310), dans lequel l'ensemble de signaux de référence spécifiques à une RIS (404 ; 520) sont configurés pour être réfléchis à partir d'une première RIS (350) ;
mesurer (525 ; 615) le premier ensemble de signaux de référence (402 ; 515) et l'ensemble de signaux de référence spécifiques à une RIS (404 ; 520), et une des étapes suivantes :
une transmission d'une première indication (630) du fait que la première RIS (350) doit être utilisée ou non pour une communication, sur la base au moins en partie de la mesure ; ou
une transmission de mesures (530) du premier ensemble de signaux de référence (402 ; 515) et des mesures (530) de l'ensemble de signaux de référence spécifiques à une RIS (404 ; 520), et une réception d'une seconde indication (535) du fait que la première RIS (350) doit être utilisée ou non pour une communication ; et
communiquer (820) avec la station de base (110 ; 310) conformément à la première ou à la seconde indication.

2. UE selon la revendication 1, dans lequel les un ou plusieurs processeurs sont configurés pour amener l'UE à :
mesurer un troisième ensemble de signaux de référence qui sont réfléchis à partir d'une seconde RIS ;
sélectionner le fait d'utiliser une ou plusieurs parmi la première RIS ou la seconde RIS, sur la base au moins en partie de la mesure, dans lequel la première indication indique si une ou plusieurs parmi la première RIS ou la seconde RIS doivent être utilisées pour une communication sur la base au moins en partie de la sélection.

3. UE selon la revendication 1, dans lequel l'ensemble de signaux de référence spécifiques à une RIS :
comprend un ou plusieurs signaux de référence qui sont quasi colocalisés, ou qui sont associés, à un bloc de signaux de synchronisation ;
sont périodiques ; ou
sont apériodiques.

4. UE selon la revendication 1, dans lequel le premier ensemble de signaux de référence et l'ensemble de signaux de référence spécifiques à une RIS sont dans une cellule de desserte de l'UE, et dans lequel les un ou plusieurs processeurs sont configurés pour amener l'UE à :
transmettre les mesures du premier ensemble de signaux de référence et les mesures de l'ensemble de signaux de référence spécifiques à une RIS ;
mesurer un troisième ensemble de signaux de référence à partir d'une cellule voisine de la cellule de desserte ; et
transmettre des mesures du troisième ensemble de signaux de référence.

5. UE selon la revendication 4, dans lequel les un ou plusieurs processeurs sont configurés pour amener l'UE à recevoir une commande de transfert intercellulaire sur la base au moins en partie de la transmission des mesures du premier ensemble de signaux de référence, des mesures de l'ensemble de signaux de référence spécifiques à une RIS, et des mesures du troisième ensemble de signaux de référence.

6. UE selon la revendication 4, dans lequel les un ou plusieurs processeurs sont configurés pour amener l'UE à :
mesurer un quatrième ensemble de signaux de référence à partir de la cellule voisine qui sont réfléchis à partir d'une seconde RIS ; et
transmettre des mesures du quatrième ensemble de signaux de référence.

7. UE selon la revendication 4, dans lequel les un ou plusieurs processeurs sont configurés pour amener l'UE à appliquer un facteur d'échelle à une ou plusieurs parmi les mesures du premier ensemble de signaux de référence, les mesures de l'ensemble de signaux de référence spécifiques à une RIS, ou les mesures du troisième ensemble de signaux de référence de telle sorte que des mesures correspondant à des signaux de référence réfléchis à partir de la première RIS soient normalisées par rapport à des mesures correspondant à des signaux de référence qui ne sont pas réfléchis à partir de la première RIS.

8. UE selon la revendication 4, dans lequel les un ou plusieurs processeurs sont configurés pour amener l'UE à recevoir, dans une commande de transfert intercellulaire, la seconde indication du fait que la première RIS doit être utilisée ou non pour une communication.

9. Station de base (110 ; 310) pour une communication sans fil, comprenant :
une mémoire ; et
un ou plusieurs processeurs, couplés à la mémoire, configurés pour amener la station de base (110 ; 310) à :
transmettre (910), à un équipement utilisateur « UE » (120 ; 320), un premier ensemble de signaux de référence (402 ; 515) et un ensemble de signaux de référence spécifiques à une surface intelligente reconfigurable « RIS » (404), dans laquelle l'ensemble de signaux de référence spécifiques à une RIS (404 ; 520) sont configurés pour être réfléchis par une première RIS (350), et une des étapes suivantes :
une réception (920), à partir de l'UE (120 ; 320), de mesures du premier ensemble de signaux de référence (402 ; 515) et de mesures de l'ensemble de signaux de référence spécifiques à une RIS (404 ; 520), et une transmission d'une première indication (535) du fait que la première RIS (350) doit être utilisée ou non pour une communication ; ou
une réception, à partir de l'UE (120 ; 320), d'une seconde indication (630) du fait que la première RIS (350) doit être utilisée ou non pour une communication ; et
communiquer (930) avec l'UE (120 ; 320) conformément à la première ou à la seconde indication.

10. Station de base selon la revendication 9, dans laquelle le premier ensemble de signaux de référence et l'ensemble de signaux de référence spécifiques à une RIS sont dans une cellule de desserte de l'UE, et dans laquelle les un ou plusieurs processeurs sont configurés pour amener la station de base à :
recevoir les mesures du premier ensemble de signaux de référence et les mesures de l'ensemble de signaux de référence spécifiques à une RIS, et transmettre une première indication du fait que la première RIS doit être utilisée ou non pour une communication ; et
recevoir des mesures d'un troisième ensemble de signaux de référence à partir d'une cellule voisine de la cellule de desserte.

11. Station de base selon la revendication 10, dans laquelle les un ou plusieurs processeurs sont configurés pour amener la station de base à transmettre une commande de transfert intercellulaire sur la base au moins en partie des mesures du premier ensemble de signaux de référence, des mesures de l'ensemble de signaux de référence spécifiques à une RIS, ou des mesures du troisième ensemble de signaux de référence.

12. Station de base selon la revendication 10, dans laquelle les un ou plusieurs processeurs sont configurés pour amener la station de base à :
recevoir des mesures d'un quatrième ensemble de signaux de référence à partir de la cellule voisine qui sont réfléchis par une seconde RIS ; et
transmettre une commande de transfert intercellulaire sur la base au moins en partie des mesures du premier ensemble de signaux de référence, des mesures de l'ensemble de signaux de référence spécifiques à une RIS, des mesures du troisième ensemble de signaux de référence, ou des mesures du quatrième ensemble de signaux de référence.

13. Station de base selon la revendication 10, dans laquelle les un ou plusieurs processeurs sont configurés pour amener la station de base à transmettre, dans une commande de transfert intercellulaire, la première indication du fait que la première RIS doit être utilisée ou non pour une communication.

14. Procédé de communication sans fil réalisé par un équipement utilisateur « UE » (120 ; 320), comprenant :
une réception (810) d'un premier ensemble de signaux de référence (402 ; 515) et d'un ensemble de signaux de référence spécifiques à une surface intelligente reconfigurable « RIS » (404 ; 520) à partir d'une station de base (110 ; 310), dans lequel l'ensemble de signaux de référence spécifiques à une RIS (404 ; 520) sont réfléchis à partir d'une première RIS (350) ;
une mesure du premier ensemble de signaux de référence (402 ; 515) et de l'ensemble de signaux de référence spécifiques à une RIS (404 ; 520), et une des étapes suivantes :
une transmission d'une première indication (630) du fait que la première RIS (350) doit être utilisée ou non pour une communication, sur la base au moins en partie de la mesure ; ou
une transmission de mesures (530) du premier ensemble de signaux de référence (402 ; 515) et de mesures (530) de l'ensemble de signaux de référence spécifiques à une RIS (404 ; 520), et une réception d'une seconde indication (535) du fait que la première RIS (350) doit être utilisée ou non pour une communication ; et
une communication (820) avec la station de base (110 ; 310) conformément à la première ou à la seconde indication.

15. Procédé de communication sans fil réalisé par une station de base (110 ; 310), comprenant :
une transmission, à un équipement utilisateur « UE » (120 ; 320), d'un premier ensemble de signaux de référence (402 ; 515) et d'un ensemble de signaux de référence spécifiques à une surface intelligente reconfigurable « RIS » (404 ; 520), dans lequel l'ensemble de signaux de référence spécifiques à une RIS (404 ; 520) sont réfléchis par une première RIS (350), et une des étapes suivantes :
une réception, à partir de l'UE (120 ; 320), de mesures (530) du premier ensemble de signaux de référence (402 ; 515) et de mesures (530) de l'ensemble de signaux de référence (404 ; 520), et une transmission d'une première indication (535) du fait que la première RIS (350) doit être utilisée ou non pour une communication ; ou
une réception, à partir de l'UE (120 ; 320), d'une seconde indication (630) du fait que la première RIS (350) doit être utilisée ou non pour une communication ; et
une communication avec l'UE (120 ; 320) conformément à la première ou à la seconde indication.
